# EUROPÄISCHE PATENTSCHRIFT

(11) **EP 3 546 430 B1**
(45) Veröffentlichungstag und Bekanntmachung des Hinweises auf die Patenterteilung: **22.05.2024**
(21) Anmeldenummer: 18163832.1
(22) Anmeldetag: 26.03.2018
(51) Int. Cl.: C02F 1/00, C02F 1/38, C02F 5/02

(54) **VORRICHTUNG UND VERFAHREN ZUR WIRKSAMKEITSÜBERWACHUNG EINER WASSERBEHANDLUNGSEINHEIT**
DEVICE AND METHOD FOR MONITORING THE EFFECTIVENESS OF A WATER TREATING UNIT
DISPOSITIF ET PROCÉDÉ DE SURVEILLANCE DE L'EFFICACITÉ D'UNE UNITÉ DE TRAITEMENT DE L'EAU

(43) Veröffentlichungstag der Anmeldung: 02.10.2019
(73) Patentinhaber: CWW Vermögensverwaltungs GmbH, 95126 Schwarzenbach/Saale (DE)
(72) Erfinder:
(74) Vertreter: Wolf, Gerhard

(56) Entgegenhaltungen:
- WO-A1-03/040043
- JP-A- H10 244 265
- US-A- 4 010 369
- US-A- 5 165 236
- US-A1- 2007 102 374

## Beschreibung

Die Erfindung betrifft eine Vorrichtung und ein Verfahren zur Wirksamkeitsüberwachung einer Wasserbehandlungseinheit.

Wasserbehandlungseinheiten zur chemiefreien Wasserbehandlung sind grundsätzlich bekannt. In derartigen Einheiten werden aus im Wasser vorhandenen Inhaltsstoffen Partikel (insbesondere Mikropartikel) aus Calciumcarbonat gebildet. Dadurch kann die Verkalkung bzw. Bildung von Kesselstein an Einrichtungen in einem Wasserkreislauf, insbesondere einem Warmwasserkreislauf wirksam verringert werden.

Aus der europäischen Patentanmeldung EP 0 525 835 A2 ist eine Vorrichtung zur Beseitigung von Kesselstein bekannt geworden, bei der die Wasserbehandlung durch ein von einer Spule erzeugtes Magnetfeld bewirkt wird. Dabei sind innerhalb eines Gehäuses eine oder mehrere Umlenkplatten vorgesehen, mittels denen eine mehrfache Umlenkung des Wassers beim Durchfließen des Gehäuses erzwungen wird.

Die Druckschrift US 4 010 369 A offenbart ein Verfahren zur schnellen Partikelgrößenanalyse.

Die Druckschrift US 5 165 236 A offenbart eine Vorrichtung zur Detektion von Partikeln in einem heißen Gasstrom.

Die Druckschrift US 2007/0102374 A1 offenbart eine Vorrichtung zur Separierung von weißen Blutzellen und Blutplättchen aus Blut.

Die Druckschrift JP 10-244265 offenbart ein Verfahren zur Abscheidung von Kalkpartikeln und Überwachung dieses Abscheideprozesses.

Die Druckschrift WO 03/040043 A1 offenbart ein Verfahren und eine Vorrichtung zur physikalischen Wasserbehandlung.

Nachteilig ist, dass bislang eine Überwachung der Wirksamkeit derartiger Wasserbehandlungseinheiten nur schwer möglich ist.

Ausgehend hiervon ist es Aufgabe der Erfindung, eine Vorrichtung anzugeben, mit der es einfach und bei hoher Betriebssicherheit möglich ist, die Funktion einer Wasserbehandlungseinheit zu überprüfen.

Die Aufgabe wird durch eine Vorrichtung gemäß den Merkmalen des unabhängigen Patentanspruchs 1 gelöst. Bevorzugte Ausführungsformen sind Gegenstand der Unteransprüche. Ein Verfahren zur Funktionsüberwachung einer Wasserbehandlungseinheit ist Gegenstand des nebengeordneten Patentanspruchs 10.

Gemäß einem ersten Aspekt bezieht sich die Erfindung auf eine Vorrichtung zur Überwachung der Abscheidung von Kalkpartikeln aus einem Wasserstrom. Die Vorrichtung umfasst einen Wasserzulauf, über den Kalkpartikel enthaltendes Wasser einer Abscheidekammer zugeführt wird. Die Abscheidekammer ist derart ausgebildet, dass innerhalb dieser eine durch Zentrifugalkräfte bewirkte Trennung der Kalkpartikel vom Wasser erfolgt. Zudem weist die Vorrichtung einen Wasserauslauf auf, über den das Wasser, aus dem die Kalkpartikel abgeschieden wurden, - nachfolgend auch als gefiltertes Wasser bezeichnet - abgeleitet wird. An der Vorrichtung ist eine Sammelkammer zur Aufnahme der aus dem Wasser abgeschiedenen Kalkpartikel vorgesehen. An dieser Sammelkammer ist eine Sensorik vorgesehen, mittels der der Abscheideprozess der Kalkpartikel aus dem Wasserstrom überwachbar ist.

Die erfindungsgemäße Vorrichtung bietet den entscheidenden Vorteil, dass über die Sensorik messbar ist, ob und in welchem Maße aus dem durch die Wasserbehandlungseinheit geleiteten Wasser Kalkpartikel ausgefiltert werden können. Das durch die Sensorik bereitgestellte Messsignal erlaubt damit einen Rückschluss, ob im gewünschten Maße ein Ausfällprozess von Kalkpartikeln in der Wasserbehandlungseinheit stattgefunden hat. Damit wird eine automatische Funktionsüberwachung der Wasserbehandlungseinheit ermöglicht.

Gemäß einem Ausführungsbeispiel ist die Sensorik eine auf Licht oder Schall basierende Sensorik. Durch Licht oder Schallmessung ist es insbesondere möglich, die Konzentration von ausgefällten Kalkpartikeln in dem in der Sammelkammer befindlichen Wasser zu bestimmen, da sich die Transmissionseigenschaften für Licht bzw. Schall abhängig von der Kalkpartikelkonzentration ändern.

Die erfindungsgemäße Sensorik weist eine Anordnung umfassend einen Sender und einen Empfänger auf, wobei der Sender dazu ausgebildet ist, ein von ihm emittiertes Signal durch die Sammelkammer hindurch dem Empfänger zuzuleiten. Insbesondere sind Sender und Empfänger einander gegenüberliegend angeordnet. Dadurch wird erreicht, dass ein vom Sender emittiertes Signal sich durch das mit Kalkpartikeln versetzte Wasser in der Sammelkammer ausbreitet und anschließend auf den Empfänger trifft. Damit weist das vom Empfänger bereitgestellte Messsignal eine Abhängigkeit von der Kalkpartikelkonzentration auf, da sich die Transmissionseigenschaften des Wassers mit der Kalkpartikelkonzentration ändern.

Die erfindungsgemäße Sensorik ist mit einer Auswerte- und Steuereinheit gekoppelt, mittels der die Konzentration von Kalkpartikeln in der Sammelkammer basierend auf dem am Empfänger gemessenen Messsignal analysierbar ist. Die Auswerte- und Steuereinheit kann dabei insbesondere die Signalstärke und/oder die im Messsignal enthaltenen spektralen Anteile auswerten und basierend darauf auf die Wirksamkeit der Ausfällung von Kalkpartikeln in der der Abscheidevorrichtung vorgeschalteten Wasserbehandlungseinheit rückschließen.

Gemäß einem Ausführungsbeispiel ist die Sensorik mit einer Auswerte- und Steuereinheit gekoppelt, über die zumindest zeitweise der Füllstand der Kalkpartikel in der Sammelkammer messbar ist. Vorzugsweise ist die Sensorik in einem oberen Bereich der Sammelkammer vorgesehen. Die in der Abscheidekammer vom Wasser abgetrennten Kalkpartikel setzen sich zunehmend in der Sammelkammer ab. Für den Fall, dass die abgesetzten Kalkpartikel eine Höhe derart erreicht haben, dass diese bis an die Höhe der Sensorik heranreichen, ist dies anhand des Messsignals feststellbar (beispielsweise durch einen Abfall des Signalpegels).

Gemäß einem Ausführungsbeispiel weist die Sammelkammer ein Auslassventil auf, das basierend auf einem von der Sensorik bereitgestellten Messsignal in eine Offenstellung bewegbar ist, um die Sammelkammer zu entleeren. Damit ist eine automatisierte Austragung der Kalkpartikel aus der Sammelkammer möglich. Diese wird insbesondere dann eingeleitet, wenn das Messsignal indiziert, dass die abgesetzten Kalkpartikel eine Höhe erreicht haben, die eine Austragung der Kalkpartikel aus der Sammelkammer nötig machen.

Gemäß einem Ausführungsbeispiel weist die Abscheidekammer einen runden Querschnitt auf, um eine Rotationsbewegung des Wassers um eine vertikale Hochachse zu bewirken. Dadurch kann vorteilhafterweise in der Abscheidekammer eine Strömung erreicht werden, die eine fliehkraftbedingte Trennung der Kalkpartikel vom Wasser ermöglicht.

Gemäß einem Ausführungsbeispiel ist der Wasserzulauf derart an der Abscheidekammer angeordnet, dass eine Einleitung des Wassers in die Abscheidekammer in tangentialer Richtung erfolgt. Dadurch wird das eingeleitete Wasser durch die gewölbte Innenwandung der Abscheidekammer abgelenkt und eine um die vertikale Hochachse der Abscheidevorrichtung rotierende Strömung erreicht.

Die Abscheidekammer ist nach unten hin zulaufend ausgebildet. In anderen Worten weist die Abscheidekammer einen sich nach unten hin verjüngenden Querschnitt auf. Dadurch kann vorteilhafterweise eine Erhöhung der Geschwindigkeit der rotierenden Strömung erreicht werden, was zu einer verbesserten Abscheidung der Kalkpartikel führt. Abweichend hiervon kann jedoch der Querschnitt, insbesondere der Durchmesser der Abscheidekammer entlang deren Höhe konstant oder im Wesentlichen konstant sein.

Die Sammelkammer ist unterhalb der Abscheidekammer angeordnet. Dadurch können die vom Wasser abgeschiedenen Kalkpartikel schwerkraftbedingt und/oder strömungsbedingt nach unten der Sammelkammer zugeführt werden.

Gemäß einem Ausführungsbeispiel ist die Sammelkammer mittels einer Trenneinrichtung von der Abscheidekammer getrennt. Dadurch kann eine Strömungsberuhigung in der Sammelkammer erreicht und damit die Wirkung der rotierenden Strömung in der Abscheidekammer auf die in der Sammelkammer befindlichen Kalkpartikel wesentlich reduziert werden.

Gemäß einem Ausführungsbeispiel wird durch die Trenneinrichtung ein randseitiger Spalt zwischen der Wandung der Abscheidekammer und der Trenneinrichtung gebildet, über den Kalkpartikel aus der Abscheidekammer in die Sammelkammer förderbar sind. Der Spalt ist dabei vorzugsweise derart bemessen, dass eine effektive Zuführung der Kalkpartikel aus der Abscheidekammer in die Sammelkammer möglich ist, gleichzeitig aber eine möglichst starke Strömungsberuhigung in der Sammelkammer erreicht wird. Der Spalt kann beispielsweise eine Breite zwischen 1 mm und 15mm, insbesondere eine Breite zwischen 5mm und 10mm aufweisen.

Gemäß einem Ausführungsbeispiel ist die Sensorik zur Überwachung des Abscheideprozesses der Kalkpartikel unterhalb der Trenneinrichtung vorgesehen. Dadurch kann die Messung der Kalkpartikelkonzentration in einem strömungsberuhigten Bereich erfolgen.

Gemäß einem weiteren Aspekt betrifft die Erfindung ein Verfahren zur Funktionsüberwachung einer Wasserbehandlungseinheit. gemäß Anspruch 10. Das Verfahren umfasst dabei die folgenden Schritte:
- Zuführen des durch die Wasserbehandlungseinheit behandelten Wassers in eine Abscheidekammer einer Abscheidevorrichtung, in der das die Kalkpartikel aufweisende Wasser in eine Rotationsbewegung versetzt wird;
- Trennen der Kalkpartikel von dem Wasser durch auf die Kalkpartikel wirkende Zentrifugalkräfte;
- Zuführen der Kalkpartikel in eine Sammelkammer der Abscheidevorrichtung; und
- Überwachen der Abscheidung der Kalkpartikel in der Sammelkammer mittels einer Sensorik. gemäß Anspruch 1.

Gemäß einem Ausführungsbeispiel des Verfahrens werden von der Sensorik bereitgestellte Messsignale einer Auswerte- und Steuereinheit zugeführt und die Wasserbehandlungseinheit wird basierend auf den von der Auswerte- und Steuereinheit ermittelten Auswerteinformationen gesteuert. Beispielsweise kann das das Magnetfeld erzeugende elektrische Signal oder der Betriebsmodus der Wasserbehandlungseinheit geändert werden, wenn das Messsignal eine zu geringe Ausfällung von Kalkpartikeln indiziert.

Unter "Wasserbehandlung" im Sinne der vorliegenden Erfindung wird insbesondere verstanden, dass durch eine Einwirkung eines Magnetfeldes oder eines Elektrolyseprozesses auf das Wasser (ggf. auch durch eine mechanische Schwingung einer Schwingeinheit unterstützt) eine Ausfällung von Kalkpartikeln vollzogen wird.

Unter "Kalk-Mikrokristallen" bzw. "Kalkpartikeln" werden im Sinne der vorliegenden Erfindung jegliche Partikel verstanden, die aus Calciumcarbonat bestehen oder zumindest einen Anteil von Calciumcarbonat enthalten.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung einer Anordnung aus einer Wasserbehandlungseinheit und einer Abscheideeinrichtung zur Wirksamkeitsüberwachung der Wasserbehandlungseinheit;
- Fig. 2: beispielhaft eine schematische Darstellung einer Abscheideeinrichtung zur Wirksamkeitsüberwachung eines Wasserbehandlungsprozesses;
- Fig. 3: beispielhaft eine Schnittdarstellung durch die Abscheidevorrichtung gemäß Fig. 2 entlang der Schnittlinie A-A;
- Fig. 4: beispielhaft eine Schnittdarstellung durch die Abscheidevorrichtung gemäß Fig. 2 entlang der Schnittlinie B-B; und
- Fig. 5: beispielhaft eine schematische Darstellung eines wasserführenden Systems mit einer Wasserbehandlungseinheit und einer Abscheidevorrichtung zur Wirksamkeitsüberwachung der Wasserbehandlungseinheit.

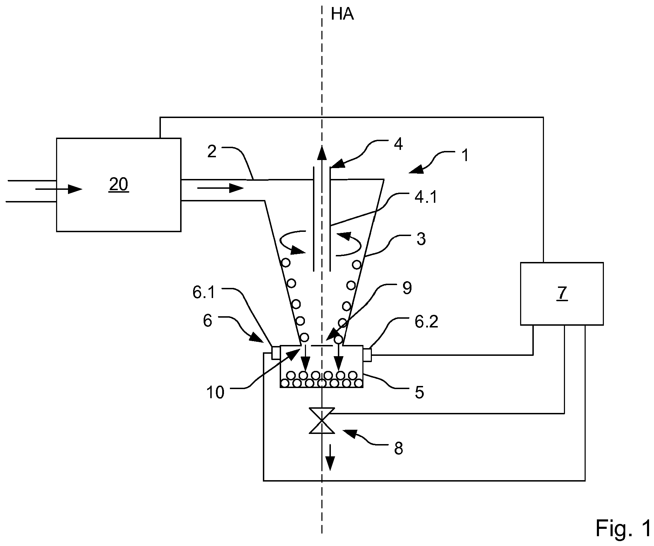

In Figur 1 ist eine Anordnung aus einer Wasserbehandlungseinheit 20 und einer Abscheidevorrichtung 1 in einer schematischen Darstellung gezeigt.

Die Wasserbehandlungseinheit 20 wird von Wasser durchflossen, wie dies beispielhaft durch die Pfeile angedeutet ist. Die Wasserbehandlungseinheit 20 ist dazu ausgebildet, durch Einwirkung eines Magnetfelds auf das Wasser oder einen Elektrolyseprozess eine Ausfällung von Calziumcarbonat-Mikropartikeln, im Folgenden als Kalkpartikel bezeichnet, zu bewirken. Die Druckschrift EP 0 525 835 A2 lehrt beispielhaft eine solche magnetfeldbasierte Wasserbehandlungseinheit.

Es ist bekannt, dass durch derartige Wasserbehandlungseinheiten 20 die Verkalkung von den in einem Wasserkreislauf, insbesondere einem Warmwasserkreislauf eingebunden Einrichtungen deutlich reduziert bzw. verhindert werden kann.

Das aus der Wasserbehandlungseinheit 20 austretende Wasser enthält durch die Ausfällung entstandene Kalkpartikel.

Um die Wirksamkeit der Wasserbehandlungseinheit 20 im laufenden Betrieb, insbesondere dauerhaft oder intermittierend in bestimmten Zeitabständen, überprüfen zu können, wird das die Kalkpartikel aufweisende Wasser einer Abscheidevorrichtung 1 zugeführt. Die Abscheidevorrichtung 1 ist dazu ausgebildet, die Kalkpartikel vom Wasser zu trennen und damit eine Ausfilterung der Kalkpartikel aus dem Wasser zu bewirken.

Die Abscheidevorrichtung 1 besteht im Wesentlichen aus einem Wasserzulauf 2, einer Abscheidekammer 3, einer Sammelkammer 5 und einem Wasserauslauf 4. Wie in Figur 1 schematisch dargestellt, wird das Kalkpartikel enthaltende Wasser über den Wasserzulauf 2 der Abscheidekammer 3 zugeführt. Der Wasserzulauf 2 ist dabei vorzugsweise relativ zur Abscheidekammer 3 derart angeordnet, dass das Wasser und die darin enthaltenen Kalkpartikel in Rotation versetzt werden (siehe die die Rotationsbewegung andeutenden Pfeile in Figur 1).

Die Abscheidekammer 3 ist vorzugsweise in Bezug auf die vertikale Hochachse HA rotationssymmetrisch ausgebildet, d.h. die Innenwandung der Abscheidekammer 3 weist einen kreisförmigen oder im Wesentlichen kreisförmigen Querschnitt auf. Dadurch wird die Rotationsbewegung des Wassers in der Abscheidekammer 3 begünstigt.

Die Kalkpartikel weisen eine größere Dichte auf als Wasser. Durch die Rotationsbewegung des Wassers wirken Zentrifugalkräfte auf die Kalkpartikel, so dass diese aufgrund ihrer größeren Dichte bei der Rotationsbewegung des Wassers gegen die Innenwandung der Abscheidekammer 3 gedrückt werden.

Die Abscheidekammer 3 ist, wie in Figur 1 gezeigt, nach unten hin zu laufend ausgebildet. In anderen Worten ist die Abscheidekammer 3 damit trichterförmig oder im Wesentlichen trichterförmig nach unten hin sich verjüngend ausgebildet. Dadurch kann eine Beschleunigung der Strömung nach unten hin erreicht werden. Alternativ kann die Abscheidekammer 3 eine zylinderförmige oder im Wesentlichen zylinderförmige Innenwandung aufweisen, d.h. nach unten hin einen gleichbleibenden Innendurchmesser haben.

Aufgrund der Strömung und schwerkraftbedingt setzen sich die Kalkpartikel nach unten hin ab und werden dabei in eine unterhalb der Abscheidekammer vorgesehene Sammelkammer 5 geleitet. Das gefilterte Wasser (d.h. das Wasser, aus dem die Kalkpartikel entzogen wurden) hingegen wird nach oben hin über das Tauchrohr 4.1 und den Wasserauslauf 4 aus der Abscheidekammer 3 abgeführt. Das untere freie Ende des Tauchrohrs 4.1 liegt vorzugsweise unterhalb des Wasserzulaufs 2.

Zur abschnittsweisen Trennung der Sammelkammer 5 von der Abscheidekammer 3 ist zwischen diesen eine Trenneinrichtung 9 vorgesehen. Die Trenneinrichtung 9 kann beispielsweise teller- oder plattenförmig ausgebildet sein. Die Trenneinrichtung 9 kann bezüglich ihrer Größe derart gewählt und derart im Übergangsbereich zwischen der Abscheidekammer 3 und der Sammelkammer 5 angeordnet sein, dass sich zwischen der Trenneinrichtung 9 und einem diese Trenneinrichtung 9 umgebenden Innenwandungsabschnitt der Abscheidevorrichtung 1 ein Spalt 10, insbesondere ein ringförmiger Spalt 10 ergibt. Über diesen Spalt 10 können die an der Innenwandung der Abscheidekammer 3 entlang bewegten Kalkpartikel der Sammelkammer 5 zugeführt werden. Die Trenneinrichtung 9 verhindert dabei zumindest größtenteils eine Übertragung der in der Abscheidekammer 3 vorhandenen Rotationsbewegung bzw. Strömung in die Sammelkammer 5.

Wie zuvor beschrieben, ist die Sammelkammer 5 dazu ausgebildet, die in der Abscheidekammer 3 durch Zentrifugalabscheidung abgetrennten Kalkpartikel aufzunehmen.

An der Sammelkammer 5 ist eine Sensorik 6 vorgesehen, basierend auf der die Wirksamkeit der Wasserbehandlung überprüft werden kann. Die Sensorik 6 ist beispielsweise dazu ausgebildet, zu detektierten, in welchem Maße der Sammelkammer 5 Kalkpartikel zugeführt werden. Durch die Sensorik 6 wird ermittelt, wie hoch die Konzentration von Kalkpartikeln in der Sammelkammer 5 ist.

Die Sensorik 6 macht sich dabei zu Nutze, dass Kalkpartikel in der Sammelkammer 5 lediglich dann detektierbar sind, wenn durch die Wasserbehandlungseinheit 1 eine Ausfällung von derartigen Kalkpartikeln bewirkt wird. Damit lässt sich über die Sensorik 6 die Funktion der Wasserbehandlungseinheit 20 überprüfen.

Wie in Figur 1 gezeigt, weist die Sensorik 6 einen Sender 6.1 und einen mit diesem Sender 6.1 zusammenwirkenden Empfänger 6.2 auf. Der Sender 6.1 kann beispielsweise ein Licht oder ein Schallsignal emittierender Sender sein. Der Empfänger 6.2 ist derart ausgebildet und angeordnet, dass dieser das vom Sender 6.1 emittierte Signal empfängt. Bevorzugt ist der Empfänger 6.2 dem Sender 6.1 gegenüberliegend angeordnet, so dass der Empfänger 6.2 ein vom Sender 6.1 ausgesendetes Signal, das zumindest abschnittsweise den Innenraum der Sammelkammer 5 durchlaufen hat, detektieren kann.

Je nach Konzentration der in der Sammelkammer 5 enthaltenen Kalkpartikel wird das vom Sender 6.1 emittierte Signal unterschiedlich stark reflektiert bzw. gedämpft, so dass das vom Empfänger 6.2 bereitgestellte Messsignal eine Abhängigkeit dahingehend zeigt, wie viele Kalkpartikel in der Abscheidekammer 3 aus dem Wasser abgeschieden und der Sammelkammer 5 zugeführt werden. Insbesondere zeigt das vom Empfänger 6.2 bereitgestellte Messsignal eine Abhängigkeit, wie hoch die Konzentration (Anzahl der Kalkpartikel pro Volumeneinheit an Wasser) der Kalkpartikel in dem in der Sammelkammer 5 enthaltenden Wasser ist.

Wie in Figur 1 gezeigt, ist die Sensorik 6 vorzugsweise in einem oberen Bereich der Sammelkammer 6, vorzugsweise unmittelbar oder im Wesentlichen unmittelbar unterhalb des Einlasses in die Sammelkammer 5 vorgesehen. Besonders bevorzugt ist die Sensorik 6 unmittelbar unterhalb der Trenneinrichtung 9 vorgesehen. Dadurch kann die Konzentration der Kalkpartikel im Übergangsbereich zwischen der Abscheidekammer 3 und der Sammelkammer 5, insbesondere direkt nach der Einleitung der Kalkpartikel von der Abscheidekammer 3 in die Sammelkammer 5 gemessen werden.

Wie in Figur 1 gezeigt lagern sich die Kalkpartikel bodenseitig in der Sammelkammer 5 ab, so dass sich die Sammelkammer 5 zunehmend mit Kalkpartikeln anfüllt. Durch die im oberen Bereich der Sammelkammer 5 angeordnete Sensorik 6 ist zudem feststellbar, ob in der Sammelkammer 5 ein Kalkpartikel-Füllstand erreicht wurde, der eine Entleerung der Sammelkammer 5 notwendig macht.

Die Sammelkammer 5 weist einen Auslauf auf, an dem ein Auslassventil 8 vorgesehen ist. Das Auslassventil 8 kann insbesondere ein automatisch betätigtes Auslassventil sein, das automatisiert geöffnet wird, sofern der Kalkpartikel-Füllstand in der Sammelkammer 5 einen Grenzwert überschreitet.

Die Abscheidevorrichtung 1 bzw. die Wasserbehandlungseinheit 20 weist eine Auswerte- und Steuereinheit 7 auf, die mit der Sensorik 6 gekoppelt ist. Insbesondere wird durch die Auswerte- und Steuereinheit 7 die Aussendung eines Signals durch den Sender 6.1 bewirkt. Zudem kann die Auswerte- und Steuereinheit 7 mit dem Empfänger 6.2 gekoppelt sein, so dass das von diesem bereitgestellte Messsignal an die Auswerte- und Steuereinheit 7 übertragen werden kann.

Die Auswerte- und Steuereinheit 7 ist dazu ausgebildet, das Messsignal auszuwerten und basierend auf dem Messsignal festzustellen, ob und in welchem Maße die Ausfällung von Kalkpartikeln durch die Wasserbehandlungseinheit 20 bewirkt wird. Insbesondere kann durch die Auswerte- und Steuereinheit 7 aus dem Messsignal abgeleitet werden, wie hoch die Konzentration der Kalkpartikel in dem in der Sammelkammer 5 enthaltenen Wasser ist. Zudem kann durch die Auswerte- und Steuereinheit 7 festgestellt werden, wie hoch der Füllstand von Kalkpartikeln innerhalb der Sammelkammer 5 ist.

Die Auswerte- und Steuereinheit 7 ist vorzugsweise über eine Steuerleitung mit dem Auslassventil 8 gekoppelt. Für den Fall, dass durch die Auswerte- und Steuereinheit 7 festgestellt wird, dass der Füllstand von Kalkpartikeln in der Sammelkammer 5 einen Pegel bzw. Schwellwert überschritten hat, kann die Auswerte- und Steuereinheit 7 ein Öffnen des Auslassventils 8 und damit ein Entleeren der Sammelkammer 5 bewirken.

Wie in Figur 1 gezeigt, kann die Auswerte- und Steuereinheit 7 zudem mit der Wasserbehandlungseinheit 20 über eine Steuerleitung gekoppelt sein. Über diese Steuerleitung kann die Auswerte- und Steuereinheit 7 beispielsweise die Intensität der Wasserbehandlung durch die Wasserbehandlungseinheit 20 steuern. Beispielsweise kann eine Änderung der Intensität der Wasserbehandlung und/oder des Betriebsmodus bewirkt werden. Dadurch ist über die Sensorik 6 und die Auswerte- und Steuereinheit 7 eine Steuerung der Wasserbehandlungseinheit 20 in Abhängigkeit von dem durch die Sensorik 6 bereitgestellten Messsignal möglich.

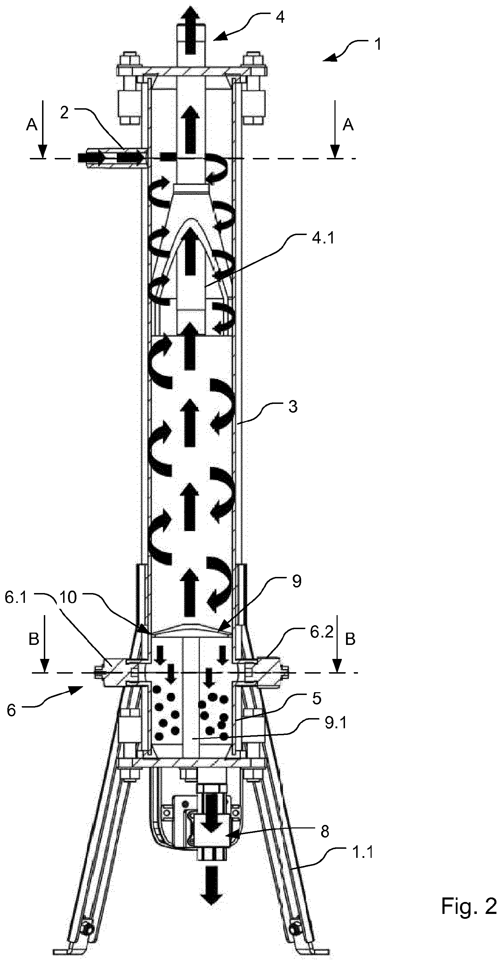

Fig. 2 bis 4 zeigen ein weiteres Ausführungsbeispiel einer Abscheidevorrichtung 1 zur Abtrennung von Kalkpartikeln aus einem Wasserstrom. Sofern nachstehend nicht anders beschrieben, gelten die vorstehenden Ausführungen auch für dieses Ausführungsbeispiel. Die Abscheidevorrichtung 1 ist im Wesentlichen turmförmig mit einer sich in vertikaler Richtung ersteckenden Hochachse HA ausgebildet.

Die Abscheidevorrichtung 1 kann beispielsweise ein Gestell 1.1 aufweisen, um die Abscheidevorrichtung 1 auf einer Aufstellfläche fixieren zu können.

Die Abscheidevorrichtung 1 umfasst im gezeigten Ausführungsbeispiel eine zylinderförmige bzw. rohrförmige Abscheidekammer 3, deren Zylinderachse vertikal ausgerichtet ist. Dabei ist die Höhe der Abscheidekammer 3 wesentlich größer als deren Durchmesser.

Die Sammelkammer 5 ist durchmessergleich oder im Wesentlichen durchmessergleich zur Abscheidekammer 3 ausgebildet. Die Abtrennung zwischen Abscheidekammer 3 und Sammelkammer 5 erfolgt wiederum durch eine Trenneinrichtung 9. Diese Trenneinrichtung 9 ist beispielsweise tellerartig und gewölbt ausgebildet, und zwar derart, dass der Mittenbereich der Trenneinrichtung 9 in Richtung des Wasserauslaufs 4 erhöht ist. Dadurch kann eine Übertragung der Strömung der Abscheidekammer 3 in die Sammelkammer 5 weiter reduziert werden.

Zur Ableitung des gefilterten Wassers aus der Abscheidekammer ist vorzugsweise ein Tauchrohr 4.1 vorgesehen. Das Tauchrohr 4.1 ist vorzugsweise zentriert in der Abscheidekammer 3 vorgesehen und erstreckt sich in vertikaler Richtung parallel zur Hochachse HA. Das unterseitige freie Ende des Tauchrohrs 4.1 ist vorzugsweise in einer Ebene unterhalb des Wasserzulaufs 2 vorgesehen.

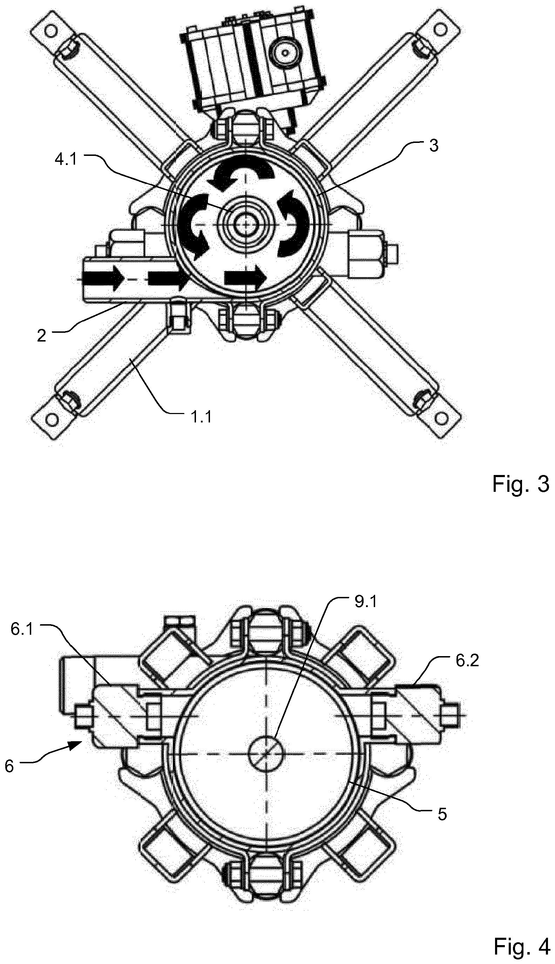

Fig. 3 zeigt einen Horizontalschnitt durch die Abscheidevorrichtung 1 im Bereich des Wasserzulaufs 2. Der Wasserzulauf ist vorzugsweise tangential in Bezug auf die Innenwandung der Abscheidekammer 3 vorgesehen. Dadurch wird das zugeführte, Kalkpartikel enthaltende Wasser nach dem Eintritt in die Abscheidekammer 3 durch die gewölbte Innenwandung abgelenkt und dadurch das in der Abscheidekammer 3 befindliche Wasser in eine Rotationsbewegung (wie durch die Pfeile in Fig. 2 und 3 angedeutet) versetzt.

Fig. 4 zeigt einen weiteren Horizontalschnitt durch die Abscheidevorrichtung 1 im Bereich der Sensorik 6. Der Sender 6.1 und der Empfänger 6.2 sind dabei einander gegenüberliegend vorgesehen, und zwar seitlich versetzt zu einer diametral durch die Sammelkammer 5 verlaufenden Linie. Dadurch wird erreicht, dass trotz eines im Querschnittszentrum angeordneten Tragabschnitts 9.1 der Trenneinrichtung 9 eine direkte Signalübertragung zwischen Sender 6.1 und Empfänger 6.2 durch den Innenraum der Sammelkammer 5 möglich ist.

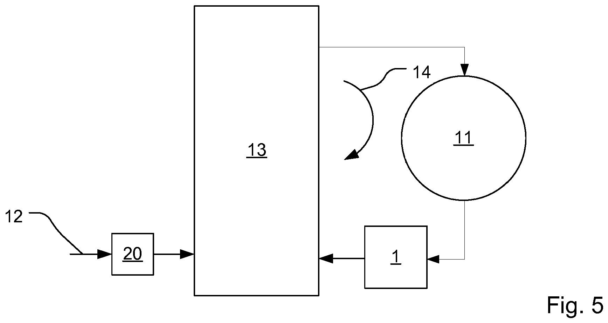

Fig. 5 zeigt eine beispielhafte Integration der Abscheidevorrichtung 1 in einen Wasserkreislauf, insbesondere einen Warmwasserkreislauf. Dabei wird Wasser, insbesondere kaltes Wasser, einer Wasserbehandlungseinheit 20 über einen Zulauf 12 zugeführt. Nach dem Durchlaufen der Wasserbehandlungseinheit 20 und der darin erfolgten Ausfällung von Calciumcarbonat (Entcarbonisierung) wird das Wasser einem Warmwasserbereiter 13 zugeführt. In diesem Warmwasserbereiter 13 wird das Wasser erwärmt. Das erwärmte Wasser kann anschließend bedarfsgerecht einem Verbraucher 11 zugeleitet werden. Der Verbraucher kann beispielsweise in einer Warmwasserzirkulation 14 vorgesehen sein, d.h. selbst dann, wenn von dem Verbraucher 11 kein Warmwasser verbraucht wird, zirkuliert das Warmwasser, wie dies durch den Pfeil mit dem Bezugszeichen 14 angedeutet ist. In diese Warmwasserzirkulation 14 kann beispielsweise die Abscheidevorrichtung 1 integriert sein, um Kalkpartikel aus dem Wasserstrom auszufiltern und die Wasserbehandlungseinheit 20 hinsichtlich deren Funktion zu überwachen.

Es versteht sich, dass die in Fig. 5 gezeigte Einbausituation rein beispielhaft ist und eine Vielzahl von anderen Einbausituationen bzw. Einsatzmöglichkeiten für die Abscheidevorrichtung 1 existieren. So kann die Abscheidevorrichtung 1 ebenso in einen Teilstrom eines Kühlturms oder eines Umlaufsprühbefeuchters eingebaut werden.

Die Erfindung wurde voranstehend an Ausführungsbeispielen beschrieben. Es versteht sich, dass zahlreiche Änderungen sowie Abwandlungen innerhalb des beanspruchten Schutzbereichs möglich sind, ohne dass dadurch der der Erfindung zugrunde liegend Erfindungsgedanke verlassen wird.

### Bezugszeichenliste

- 1: Abscheidevorrichtung
- 1.1: Gestell
- 2: Wasserzulauf
- 3: Abscheidekammer
- 4: Wasserauslauf
- 4.1: Tauchrohr
- 5: Sammelkammer
- 6: Sensorik
- 6.1: Sender
- 6.2: Empfänger
- 7: Auswerte- und Steuereinheit
- 8: Auslassventil
- 9: Trenneinrichtung
- 9.1: Tragabschnitt
- 10: Spalt
- 11: Verbraucher
- 12: Zulauf
- 13: Warmwasserbereiter
- 14: Warmwasserzirkulation

- 20: Wasserbehandlungseinheit

- HA: Hochachse

## Patentansprüche

1. Vorrichtung zur Überwachung der Abscheidung von Kalkpartikeln aus einem Wasserstrom umfassend einen Wasserzulauf (2), über den Kalkpartikel enthaltendes Wasser zugeführt wird, eine Abscheidekammer (3), innerhalb der eine durch Zentrifugalkräfte bewirkte Trennung der Kalkpartikel vom Wasser erfolgt und einen Wasserauslauf (4), über den das Wasser, aus dem die Kalkpartikel abgeschieden wurden, abgeleitet wird, wobei eine Sammelkammer (5) zur Aufnahme der aus dem Wasser abgeschiedenen Kalkpartikel vorgesehen ist, wobei an der Sammelkammer (5) eine Sensorik (6) vorgesehen ist, mittels der der Abscheideprozess der Kalkpartikel aus dem Wasserstrom überwachbar ist, wobei die Sensorik (6) eine Anordnung umfassend einen Sender (6.1) und einen Empfänger (6.2) aufweist, wobei der Sender (6.1) dazu ausgebildet ist, ein von ihm emittiertes Signal durch die Sammelkammer (5) hindurch dem Empfänger (6.2) zuzuleiten, wobei die Abscheidevorrichtung (1) eine Auswerte- und Steuereinheit (7) aufweist, wobei die Sensorik (6) mit der Auswerte- und Steuereinheit (7) gekoppelt ist, mittels der die Konzentration von Kalkpartikeln in der Sammelkammer (5) basierend auf dem am Empfänger (6.2) gemessenen Messsignal analysierbar ist, wobei die Abscheidekammer (3) nach unten hin zulaufend ausgebildet ist und wobei die Sammelkammer (5) unterhalb der Abscheidekammer (3) angeordnet ist.

2. Vorrichtung nach Anspruch 1, **dadurch gekennzeichnet, dass** die Sensorik (6) eine auf Licht oder Schall basierende Sensorik ist.

3. Vorrichtung nach einem der vorhergehenden Ansprüche, **dadurch gekennzeichnet, dass** die Sensorik (6) mit einer Auswerte- und Steuereinheit (7) gekoppelt ist, über die zumindest zeitweise der Füllstand der Kalkpartikel in der Sammelkammer (5) messbar ist.

4. Vorrichtung nach einem der vorhergehenden Ansprüche, **dadurch gekennzeichnet, dass** die Sammelkammer (5) ein Auslassventil (8) aufweist, das basierend auf einem von der Sensorik (6) bereitgestellten Messsignal in eine Offenstellung bewegbar ist, um die Sammelkammer (5) zu entleeren.

5. Vorrichtung nach einem der vorhergehenden Ansprüche, **dadurch gekennzeichnet, dass** die Abscheidekammer (3) einen runden Querschnitt aufweist, um eine Rotationsbewegung des Wassers um eine vertikale Hochachse (HA) zu bewirken.

6. Vorrichtung nach einem der vorhergehenden Ansprüche, **dadurch gekennzeichnet, dass** der Wasserzulauf (2) derart an der Abscheidekammer (3) angeordnet ist, dass eine Einleitung des Wassers in die Abscheidekammer (3) in tangentialer Richtung erfolgt.

7. Vorrichtung nach einem der vorhergehenden Ansprüche, **dadurch gekennzeichnet, dass** die Sammelkammer (5) mittels einer Trenneinrichtung (9) von der Abscheidekammer (3) getrennt ist.

8. Vorrichtung nach Anspruch 7, **dadurch gekennzeichnet, dass** durch die Trenneinrichtung (9) ein randseitiger Spalt (10) zwischen der Wandung der Abscheidekammer (3) und der Trenneinrichtung (9) gebildet wird, über den Kalkpartikel aus der Abscheidekammer (3) in die Sammelkammer (5) förderbar sind.

9. Wasserbehandlungseinheit nach Anspruch 7 oder 8, **dadurch gekennzeichnet, dass** die Sensorik (6) zur Überwachung des Abscheideprozesses der Kalkpartikel unterhalb der Trenneinrichtung (9) vorgesehen ist.

10. Verfahren zur Funktionsüberwachung einer Wasserbehandlungseinheit (20) umfassend die folgenden Schritte:
- Zuführen des durch die Wasserbehandlungseinheit (20) behandelten Wassers in eine Abscheidekammer (3) einer Abscheidevorrichtung (1), die nach unten hin zulaufend ausgebildet ist und in der das die Kalkpartikel aufweisende Wasser in eine Rotationsbewegung versetzt wird;
- Trennen der Kalkpartikel von dem Wasser durch auf die Kalkpartikel wirkende Zentrifugalkräfte;
- Zuführen der Kalkpartikel in eine Sammelkammer (5) der Abscheidevorrichtung (1), die unterhalb der Abscheidekammer (3) angeordnet ist; und
- Überwachen der Abscheidung der Kalkpartikel in der Sammelkammer (5) mittels einer Sensorik (6), die einen Sender (6.1) und einen Empfänger (6.2) aufweist, wobei der Sender (6.1) ein von ihm emittiertes Signal durch die Sammelkammer (5) hindurch dem Empfänger (6.2) zuleitet, wobei die Abscheidevorrichtung (1) eine Auswerte- und Steuereinheit (7) aufweist und wobei die Sensorik (6) mit der Auswerte- und Steuereinheit (7) gekoppelt ist, mittels der die Konzentration von Kalkpartikeln in der Sammelkammer (5) basierend auf dem am Empfänger (6.2) gemessenen Messsignal analysiert wird.

11. Verfahren nach Anspruch 10, **dadurch gekennzeichnet, dass** von der Sensorik (6) bereitgestellte Messsignale der Auswerte- und Steuereinheit (7) zugeführt werden und dass die Wasserbehandlungseinheit (20) basierend auf den von der Auswerte- und Steuereinheit (7) ermittelten Auswerteinformationen gesteuert wird.

## Claims

1. An apparatus for monitoring the separation of lime particles from a water stream, comprising a water inlet (2), via which water that contains lime particles is fed, a separation chamber (3), within which the lime particles are separated from the water by centrifugal forces, and a water outlet (4), via which the water from which the lime particles have been separated is discharged, a collection chamber (5) being provided for receiving the lime particles separated from the water and a sensor system (6) being provided at the collection chamber (5), by means of which sensor system the separation process of the lime particles from the water stream can be monitored, wherein the sensor system (6) has an arrangement comprising a transmitter (6.1) and a receiver (6.2), the transmitter (6.1) being configured to supply a signal emitted by the transmitter through the collection chamber (5) to the receiver (6.2), wherein the separator (1) comprises an evaluation and control unit (7), wherein the sensor system (6) is coupled to the evaluation and control unit (7), by means of which the concentration of lime particles in the collection chamber (5) can be analyzed on the basis of the measuring signal measured at the receiver (6.2), wherein the separation chamber (3) is designed to taper downwards and wherein the collection chamber (5) is arranged below the separation chamber (3).

2. The apparatus according to claim 1, **characterized in that** the sensor system (6) is a sensor system on the basis of light or sound.

3. The apparatus according to any of the preceding claims, **characterized in that** the sensor system (6) is coupled with an evaluation and control unit (7) via which the filling level of the lime particles in the collection chamber (5) can be measured at least temporarily.

4. The apparatus according to any of the preceding claims, **characterized in that** the collection chamber (5) comprises an outlet valve (8), which can be moved to an open position on the basis of a measuring signal provided by the sensor system (6) in order to empty the collection chamber (5).

5. The apparatus according to any of the preceding claims, **characterized in that** the separation chamber (3) omprises a round cross-section to effect a rotational movement of the water about a vertical normal axis (HA).

6. The apparatus according to any of the preceding claims, **characterized in that** the water inlet (2) is arranged at the separation chamber (3) in such a way that water is introduced into the separation chamber (3) in a tangential direction.

7. The apparatus according to any of the preceding claims, **characterized in that** the collection chamber (5) is separated from the separation chamber (3) by means of a separating device (9).

8. The apparatus according to claim 7, **characterized in that** by means of the separating device (9) an edge-side gap (10) is formed between the wall of the separation chamber (3) and the separating device (9), via which lime particles can be conveyed out of the separation chamber (3) into the collection chamber (5).

9. A water treatment unit according to claim 7 or 8, **characterized in that** the sensor system (6) for monitoring the separation process of the lime particles is provided below the separating device (9).

10. A method for monitoring the function of a water treatment unit (20), comprising the following steps:
- feeding the water treated by the water treatment unit (20) into a separation chamber (3) of a separator (1), which is designed to taper downwards and in which the water containing the lime particles is set into a rotational movement;
- separating the lime particles from the water by centrifugal forces acting on the lime particles;
- feeding the lime particles into a collection chamber (5) of the separator (1), which is arranged below the separation chamber (3); and
- monitoring the separation of the lime particles in the collection chamber (5) by means of a sensor system (6), which comprises a transmitter (6.1) and a receiver (6.2), wherein the transmitter (6.1) being configured to supply a signal emitted by the transmitter through the collection chamber (5) to the receiver (6.2), wherein the separator (1) comprises an evaluation and control unit (7) and wherein the sensor system (6) is coupled to the evaluation and control unit (7), by means of which the concentration of lime particles in the collection chamber (5) can be analyzed on the basis of the measuring signal measured at the receiver (6.2).

11. The method according to claim 10, **characterized in that** measuring signals provided by the sensor system (6) are fed to the evaluation and control unit (7) and **in that** the water treatment unit (20) is controlled on the basis of the evaluation information determined by the evaluation and control unit (7).

## Revendications

1. Dispositif destiné à surveiller la séparation de particules de calcaire d'un flux d'eau, comprenant une arrivée d'eau (2) par laquelle de l'eau contenant des particules de calcaire est amenée, une chambre de séparation (3) à l'intérieur de laquelle s'effectue une séparation des particules de calcaire de l'eau, qui est provoquée par des forces centrifuges, et une sortie d'eau (4) par laquelle l'eau est évacuée de laquelle les particules de calcaire ont été séparées,
dans lequel
il est prévu une chambre collectrice (5) pour recevoir les particules de calcaire séparées de l'eau,
il est prévu un système capteur (6) sur la chambre collectrice (5), permettant de surveiller le processus de séparation des particules de calcaire du flux d'eau,
le système capteur (6) comprend un ensemble constitué d'un émetteur (6.1) et d'un récepteur (6.2), l'émetteur (6.1) étant conçu pour transmettre un signal qu'il a émis au récepteur (6.2) à travers la chambre collectrice (5),
le dispositif de séparation (1) comprend une unité d'évaluation et de commande (7),
le système capteur (6) est couplé à l'unité d'évaluation et de commande (7) permettant d'analyser la concentration de particules de calcaire dans la chambre collectrice (5) en se basant sur le signal de mesure mesuré au niveau du récepteur (6.2),
la chambre de séparation (3) est réalisée de manière à s'effiler vers le bas, et
la chambre collectrice (5) est disposée en dessous de la chambre de séparation (3).

2. Dispositif selon la revendication 1,
**caractérisé en ce que** le système capteur (6) est un système capteur basé sur la lumière ou le son.

3. Dispositif selon l'une des revendications précédentes,
**caractérisé en ce que** le système capteur (6) est couplé à une unité d'évaluation et de commande (7) permettant de mesurer au moins temporairement le niveau de remplissage des particules de calcaire dans la chambre collectrice (5).

4. Dispositif selon l'une des revendications précédentes,
**caractérisé en ce que** la chambre collectrice (5) présente une vanne de sortie (8) qui peut être déplacée dans une position ouverte sur la base d'un signal de mesure fourni par le système capteur (6), afin de vider la chambre collectrice (5).

5. Dispositif selon l'une des revendications précédentes,
**caractérisé en ce que** la chambre de séparation (3) présente une section transversale ronde afin de provoquer un mouvement de rotation de l'eau autour d'un axe vertical (HA).

6. Dispositif selon l'une des revendications précédentes,
**caractérisé en ce que** l'arrivée d'eau (2) est disposée sur la chambre de séparation (3) de telle sorte qu'une introduction de l'eau dans la chambre de séparation (3) se fait dans une direction tangentielle.

7. Dispositif selon l'une des revendications précédentes,
**caractérisé en ce que** la chambre collectrice (5) est coupée de la chambre de séparation (3) au moyen d'un organe de coupure (9).

8. Dispositif selon la revendication 7,
**caractérisé en ce que** l'organe de coupure (9) forme une fente (10) du côté bord entre la paroi de la chambre de séparation (3) et l'organe de coupure (9), ladite fente permettant de transporter des particules de calcaire de la chambre de séparation (3) vers la chambre collectrice (5).

9. Unité de traitement de l'eau selon la revendication 7 ou 8,
**caractérisée en ce que** le système capteur (6) destiné à surveiller le processus de séparation des particules de calcaire est prévu en dessous de l'organe de coupure (9).

10. Procédé de surveillance du fonctionnement d'une unité de traitement de l'eau (20), comprenant les étapes suivantes consistant à :
- amener l'eau, traitée par l'unité de traitement de l'eau (20), vers une chambre de séparation (3) d'un dispositif de séparation (1), laquelle est réalisée de manière à s'effiler vers le bas et dans laquelle l'eau contenant les particules de calcaire est mise en mouvement de rotation ;
- séparer les particules de calcaire de l'eau par des forces centrifuges agissant sur les particules de calcaire ;
- amener les particules de calcaire dans une chambre collectrice (5) du dispositif de séparation (1), qui est disposée en dessous de la chambre de séparation (3) ; et
- surveiller la séparation des particules de calcaire dans la chambre collectrice (5) au moyen d'un système capteur (6) qui présente un émetteur (6.1) et un récepteur (6.2), l'émetteur (6.1) transmettant un signal qu'il a émis au récepteur (6.2) à travers la chambre collectrice (5), le dispositif de séparation (1) présentant une unité d'évaluation et de commande (7), et le système capteur (6) étant couplé à l'unité d'évaluation et de commande (7) au moyen de laquelle la concentration de particules de calcaire dans la chambre collectrice (5) est analysée sur la base du signal de mesure mesuré au niveau du récepteur (6.2).

11. Procédé selon la revendication 10,
**caractérisé en ce que** les signaux de mesure fournis par le système capteur (6) sont amenés à l'unité d'évaluation et de commande (7), et
**en ce que** l'unité de traitement de l'eau (20) est commandée sur la base des informations d'évaluation déterminées par l'unité d'évaluation et de commande (7).
